# EUROPEAN PATENT APPLICATION

(11) **EP 3 633 988 A1**
(43) Date of publication of application: **08.04.2020**
(21) Application number: 19201527.9
(22) Date of filing: 04.10.2019
(51) Int. Cl.: H04N 7/18

(54) **SECURITY MONITORING AND COMMUNICATION SYSTEM USING PROJECTOR FOR DOORS AND VEHICLES**

(30) Priority: 05.10.2018 US 201862742216 P; 14.01.2019 US 201916247110
(71) Applicant: Chatterjee, Ron, Fort Wayne, IN 46802 (US); Sung, Jinwon, Troy, MI 48083 (US); McClelland, William, Waterford, MI 48329 (US)
(72) Inventor: SUNG, Jinwon, Troy, MI Michigan 48084 (US); MCCLELLAND, William, Waterford, MI Michigan 48329 (US)
(74) Representative: FRKelly

(57) **Abstract**

This invention is about using a projector to monitor doors, provide networkable or non-networked security, and perform vehicle-to-vehicle and/or vehicle-to-person communication. The embodiments and purposes may be employed without a network connection and without a dedicated display component or screen.

## Description

### BACKGROUND

This invention is about using a projector to monitor doors, provide networkable or non-networked security, and perform vehicle-to-vehicle and/or vehicle-to-person communication. Audio and video enabled security systems are used to some degree on building doors, walls, and cars. There are Ring™ doorbells and other consumer electronic devices that enable door monitoring via video feed to a cell phone or computer, but these systems require networked connections by multiple devices along with screen (e.g., LED) display on at least one of the devices. To display the video feed or otherwise communicate, these systems rely on a network connection (wired or wireless) and screen display(s). Because digital video produces large files, such feeds may require heavy network usage or sizable storage. These components are expensive, require complicated setup and maintenance, and are prone to breaking. Any networked components are susceptible to various forms of hacking, system outages, weak signals, and signal interference. Nonetheless there is a multitude of situations that can be improved by communicating images and simple messages.

Communication and security in vehicle applications also have limitations. There are times when vehicle-to-vehicle communication may be helpful, such as providing warnings regarding road hazards, alert other drivers of damage to their vehicle, and the like. At the same time, vehicle security is generally limited to audible alarms that sound when there is unauthorized access. Such security systems do not provide a user with any other pertinent information.

Therefore, it would be advantageous to provide a monitoring and communication system that is simple in construction and robust in application. The present invention pertains to a system for communication and/or monitoring without the need for a network or dedicated screen components.

### SUMMARY

In one aspect, the present disclosure is directed to a communication and security system having a projector and a camera. The projector is mounted to display an image onto a static surface of an interior of a building or vehicle. The camera is mounted to an exterior of the building or vehicle for providing a video feed to the projector. The projector displays the video feed from the camera onto the static surface.

In another aspect, the present disclosure is directed to a one-way communication system having a projector, a memory, and a processor. The projector is mounted to display an image on a static surface of an exterior of a building or vehicle. The memory stores a message. The processor is coupled to the memory to cause the system to display the message via the projector.

### BRIEF DESCRIPTION OF THE DRAWING(S)

The foregoing Summary and the following detailed description will be better understood when read in conjunction with the appended drawings, which illustrate a preferred embodiment of the invention. In the drawings:
FIG. 1 is a front view of a doorway incorporating a projector in accordance with an embodiment of the present invention providing one-way communication;
FIG. 2A is a top view of a door and wall incorporating a security system in accordance with another embodiment of the present invention;
FIG. 2B is a schematic illustration of the security system of FIG. 2A;
FIG. 3 is a rear view of a vehicle incorporating a projector in accordance with an embodiment of the present invention providing one-way vehicle-to-person communication;
FIG. 4 is a front-side view of a vehicle incorporating a projector in accordance with another embodiment of the present invention providing vehicle-to-vehicle communication;
FIG. 5 is a rear view of a vehicle incorporating a projector in accordance with another embodiment of the present invention providing one-way vehicle-to-vehicle communication; and
FIG. 6 is a partial perspective view of a vehicle incorporating a projector in accordance with yet another embodiment of the present invention providing one-way vehicle-to-vehicle communication.

### DETAILED DESCRIPTION OF THE PREFERRED EMBODIMENTS

Certain terminology is used in the following description for convenience only and is not considered limiting. Words such as "front", "back", "top" and "bottom" designate directions in the drawings to which reference is made. This terminology includes the words specifically noted above, derivatives thereof and words of similar import. Additionally, the terms "a" and "one" are defined as including one or more of the referenced item unless specifically noted. The phrase "at least one" followed by a list of two or more items (such as "at least one of A, B, or C") means any individual one of A, one of B, or one of C as well as any combination of two or three thereof.

At the outset, it is understood that this invention is not limited only to the particular embodiments, methodology, materials, and modifications described herein, and as such may vary. It is also understood that the terminology used herein is for the purpose of describing particular aspects only, and is not intended to limit the scope of the present invention, which is limited only by the appended claims. In general, in the illustrated embodiments, similar parts are given similar reference numerals, e.g., projectors 130/230/330/430/530, and these parts may have all or some of the same features.

Unless defined otherwise, all technical and scientific terms used herein have the same meaning as commonly understood to one of ordinary skill in the art to which this invention belongs. Although any methods, devices or materials similar or equivalent to those described herein can be used in the practice or testing of the invention, the following example methods, devices, and materials are now described.

In general, the present application is directed to using a projector system for communication of information. This information may be, for example, a preprogrammed written message; a written message prepared via dictation, typing, or the like; a video; a video feed; or the like. A preprogrammed message may be provided by the manufacturer or the end user. The projector displays on any surface available, preferably a generally flat surface such as the ground, a wall, or a vehicle surface. The projector in any of the embodiments below can be calibrated for various types of surfaces and surface shapes, and the projector may be adjustably mounted. For simplicity and clarity, any such surface may be described herein as the "screen" for the projector.

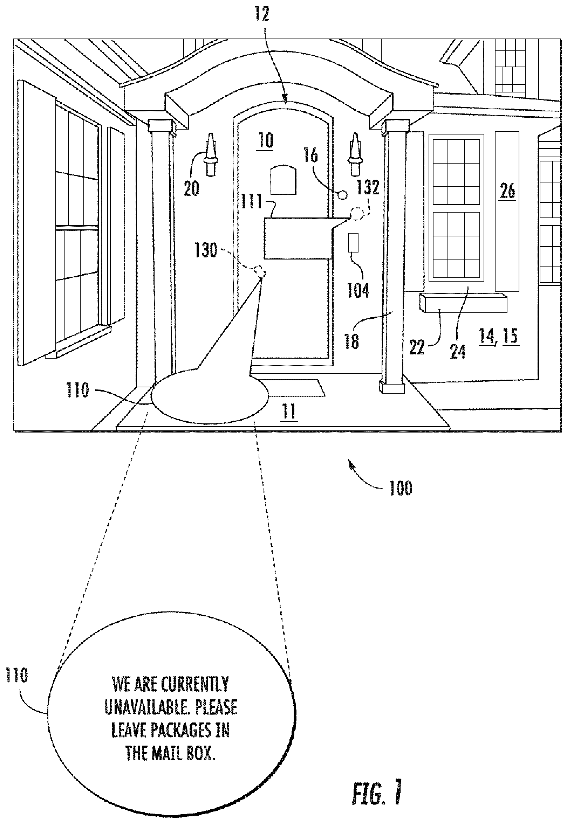

Fig. 1 shows an exemplary embodiment of a security/communication system 100 applied to a door 10 of a building such as a house. An exterior projector 130 mounted in the door 10 displays a message 110 on the ground 11 to be read by a visitor, for example a delivery courier. In this manner, the resident can use the message 110 to provide instructions or information, for example, where and how to leave a mail package. In some embodiments, an audible message 111 may be provided by a speaker 132. As discussed further below, the message 110/111 may be input by the user at the time of the event or it may be prerecorded.

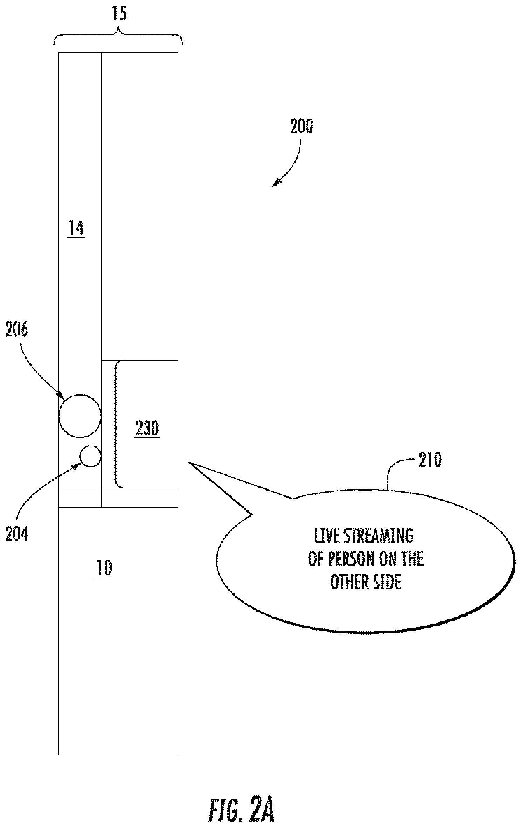

Fig. 2A illustrates an embodiment of a security/communication system 200 that provides information to an interior (right side in Fig. 2A) of a building. Here, a projector 230 provides an image 210 relayed from a camera 206. The image 210 may be a still image capture, a video segment, or a live video feed. The image 210 may be projected onto any suitable surface of the building interior, such as a floor, wall, the door 10, or the like. The projector 230 may have a wired connection (i.e., a direct or closed connection) to the camera 206 that is not part of a network. A motion sensor 204 may be provided to detect activity outside the building and activate the camera 206 and the projector 230.

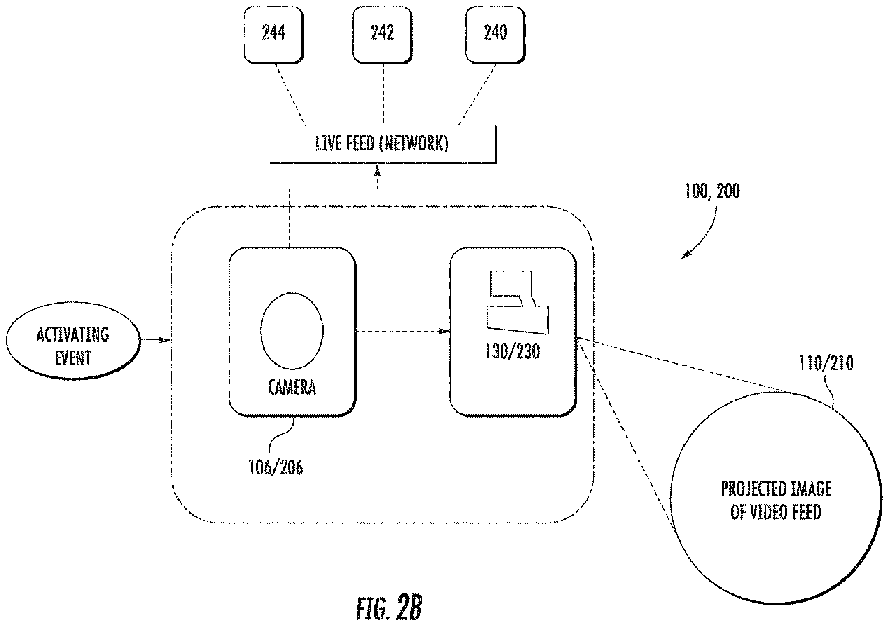

Fig. 2B schematically illustrates an embodiment of the present invention providing a doorway security/communication system 100/200 including a projector 130/230. The security/communication system 100/200 may include a motion sensor 104/204 used to activate the other components of the communication system. A live image/video feed from the camera 106/206 may also be supplied via a network to other devices, such as a cell phone 240, email server 242, hard drive 244, or the like. In this manner the live feed may be immediately provided to a user at remote locations and/or saved in a memory.

As shown in Figs. 1-2B, generally, the motion sensor 104/204 and/or camera 106/206 may be supported by any exterior structure such as a door 10, door frame 12, building facade 14, wall 15, or other nearby structure (including a doorbell 16, pillar 18, light 20, window box 22, window frame 24, window shutter 26, or the like). The motion sensor 236 can be used to activate the exterior projector 130 (Fig. 1) or an interior projector 230 (Fig. 2). The camera 106/206 may capture still or video image(s) and send them to the interior projector 230. In one exemplary embodiment, the motion sensor 104/204 turns on the camera 106/206 and projector 130/230, then the camera 106/206 records outside the door 10, and the projector 230 displays (at 210) the recorded camera information. In this way, the user inside the building can ascertain whether there is any security risk before opening the door 10 and/or the user can display a relevant message 110 via the projector 130 without opening the door.

One skilled in the art would appreciate that the systems 100 and 200 could be combined to provide an interior projector 230 providing information to a user on the interior of the building and also an exterior projector 130 sending a message 110 to the exterior of the building. Such a combined system may be non-networked or networked for the purposes discussed above.

Optionally, the camera 106/206 may provide a feed via wired or wireless projection for display on a device such as a television, cell phone, or a remotely located projector. In this manner, a user may monitor a door 10 even if unable to view a projected image 210 from the projector 230.

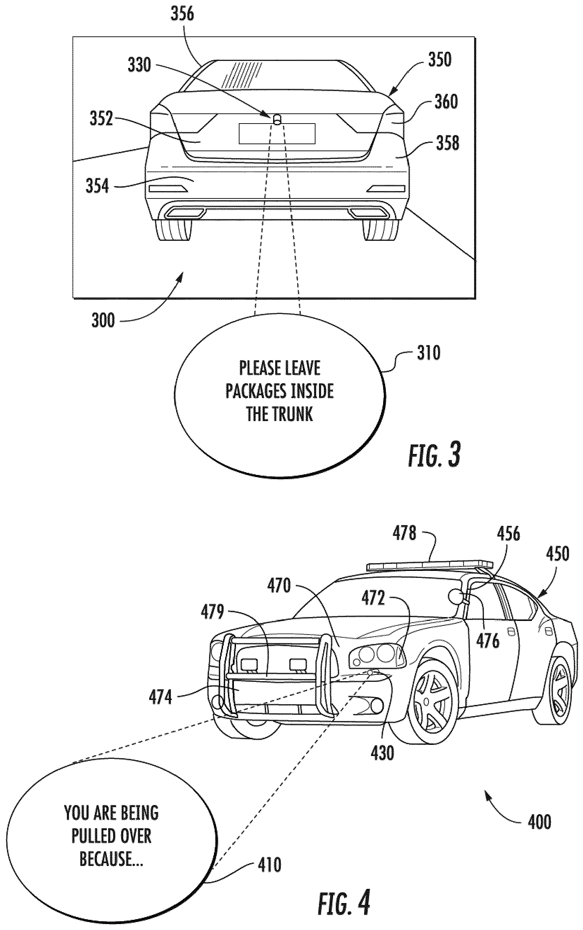

Fig. 3 shows a communication system 300 embodiment of the present application mounted on a vehicle 350 exterior such as the trunk 352. In this embodiment, the vehicle 350 may be parked and used for receiving a package delivery. The projector 330 displays a relevant message 310 to the delivery person, such as where and how to leave the package. The delivery person may have a means (such as a keypad combination) to open the vehicle 350 (door or trunk 352), or the vehicle may be wirelessly networked such that the owner may selectively open the vehicle.

Fig. 4 shows a system 400 the present application particularly useful to a vehicle 450 in law enforcement use, although applicable to any vehicle. To defuse the tension initially present during a traffic stop, an officer may project a message 410 for the pulled-over driver. A projector 430 may be mounted anywhere on the vehicle 450, and is illustrated as mounted in a front 470 of the vehicle under a headlight 472. Various other mounting locations may be used such as the bumper 474, pillars 456, side mirrors/spotlights 476, roof or roof rack 478, grille 479, or the like. In this embodiment, it is particularly advantageous for the projector 430 to be adjustably mounted to pivot and move the location of the projected message 410. The system 400 is considered a one-way vehicle-to-vehicle communication, and utilizes the projector 430 to safely communicate a message 410.

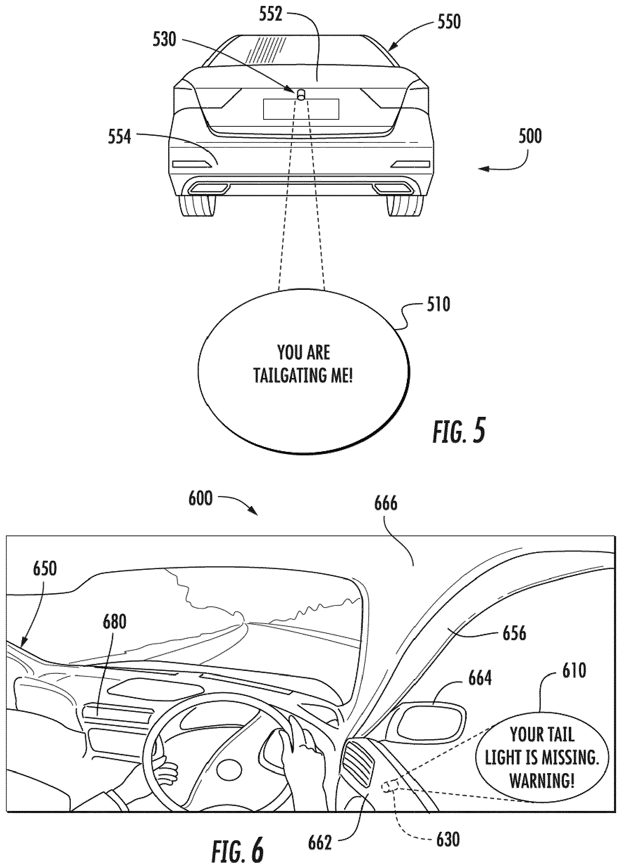

Fig. 5 shows a communication system 500 for use by a vehicle 550 while in motion to communicate a message 510 to other drivers. This embodiment provides a projector 530 mounted in the trunk 552, similar to the exemplary embodiment of Fig. 3. Such messages 510 may be preprogrammed so that the driver sending the message does not have to type or otherwise be distracted while sending this message. Alternatively a passenger may input a message.

Fig. 6 shows another communication system 600 of the present application for use by a vehicle 650 in motion. The vehicle 650 has a projector 630 mounted proximate a side of the vehicle for communicating a message 610 to another vehicle in another lane. As illustrated the projector 630 is mounted in a door 662, although it may be mounted in any applicable location such as a pillar 656, a side-view mirror 664, a roof 666, and the like. As with previous vehicle embodiments, the message 610 may be preprogrammed or input by a passenger, for example via inputs on the dashboard 680. Inputs may be made by other means such as voice-to-text with on-board vehicle technology, or relayed through a cell phone to the vehicle 650.

In any embodiments described herein, the ground 11, building floor, building wall 15, or other structure constitutes a "static surface" upon which the projector 130/230 displays. Likewise in vehicle applications, the ground or other surfaces outside or inside the vehicle upon which the projector 330/430/530/630 displays constitute a "static surface." The term "static surface" differentiates from a dedicated display screen, such as an LED screen, regardless of whether the dedicated display screen is part of a mobile electronic device or built into a building/vehicle. In other words, the projector 130/230/330/430/530/630 displays an image, video, or message on a static surface that is otherwise not designed or intended to be used in display/communication.

Although features and elements are described above in particular combinations, one of ordinary skill in the art will appreciate that each feature or element can be used alone or in any combination with the other features and elements. In addition, any of the components and methods described above may be automatically performed, manually controlled, or electronically controlled. The systems and components may be network-enabled or have ports for hardwired connections.

The vehicle system 300/400/500/600 embodiments above may be combined with the systems and principles of the building system embodiments 100/200 to have personal security applications. A vehicle 350/450/550/650 may have one or more cameras incorporated into exterior or interior areas (such as the locations for mounting a projector noted above), and a projector 330/430/530/630 may project an image/video feed from the camera(s). In an exterior application, a projector 330/430/530/630 may project the image/video feed image 310/410/510/610 onto the ground or another surface before a user approaches the vehicle. The image 310/410/510/610 may be projected near the vehicle, or at distances from 20 feet up to 100 feet. Such a system may provide the user with awareness of the vehicle's surroundings or whether the vehicle interior has been accessed. In an interior application, a projector 330/430/530/630 may project an image/video feed image 310/410/510/610 onto a vehicle console, glove box, dashboard, floor, or windshield, so as to provide the user with information about the vehicle's surroundings before exiting the vehicle 350/450/550/650. Such combined security systems may be motion activated, activated putting the car in park or turning the car off, activated by proximity to a vehicle key fob, or activated when an input (e.g., button, slide, switch) is activated on a vehicle key fob or inside the vehicle.

The embodiments described above provide significant advantages. Use of a projector 130/230/330/430/530/630 to perform communication and security monitoring reduces the reliance on networked connections and dedicated displays. Since the projector 130/230/330/430/530/630 can display on walls, floor, ceiling, or other objects, it is versatile and widely applicable. Moreover, the present invention provides for projectors 130/230/330/430/530/630 being part of networkable smart doors, smart homes, and communication systems (vehicle-to-vehicle and/or vehicle-to-person). The present invention provides security capabilities for doors and other devices while providing a one-way video or image communication system. The present invention also may be incorporated into an app for control via a computer, cell phone, or other electronic device. The present invention can be used anywhere exterior or interior of a building/property for securing exterior doors as well as interior doors or any areas that require surveillance.

As used herein, the term "network connection" is broadly applicable to wired or wireless connections, whether Internet-enabled or a closed network, which incorporate additional device(s) beyond those of the communication and security system 100/200/300/400/500/600. Similarly, a "wireless network connection" as used herein is applicable to various technologies including Wi-Fi, cell signal, mobile data, Bluetooth, and the like, which incorporate additional device(s) beyond those of the communication and security system 100/200/300/400/500/600.

Any type of projector is applicable to the embodiments discussed above. In some preferred embodiments, a DLP type Pico projector can be used. The projector 130/230/330/430/530/630 can be calibrated for suitable brightness, contrast, clarity, etc. An applicable projector can be mounted on the door (e.g. vehicle) to provide security and can also work as an effective communication device without having the system to rely on a network or any kind of display technology.

In building applications (such as Figs. 1-2B), the present application details the use of projector technology that can be used to provide network-enabled or non-networked building security and also perform one way image and video communication. Use of a projector (instead of a dedicated display such as LED) eliminates the need for a display screen. Multiple projectors can be used and integrated to provide additional security. This invention thus provides a safe and effective way to communicate while providing real-time situational awareness. The systems may take an image/video feed from a camera and directly send this information, for example via HDMI cable, to the projector which will then be displayed on the other side of a wall or door onto the floor. The projector will have tilt capabilities that can be used to project image(s) based on user preference if floor or ceiling is not the choice of screen. The present invention can also work as an add-on to a traditional Wi-Fi enabled door security system. The systems of the present invention may be self-contained such that they do not require any software setup or app connectivity to function properly.

In vehicle applications (such as Figs. 3-6), the present application provides various advantageous features and applications. One-way information can be provided to other drivers by projecting images and video on the ground. This invention relates to projectors for buildings or automotive applications. As a person approaches his or her vehicles or doors or mail box, projection works by providing video or image communication. The projector can be used around a vehicle to provide security as well as information on the ground to communicate with other drivers. The projector can also be used in the vehicle to provide instruction for vehicle delivery, and may work with a smart mail box. Projectors can also work in vehicle-to-vehicle communication in lieu of hand signals or voice.

The present invention can also be used in law enforcement situations, particularly where there is strict restriction on network connection and usage. Moreover, the embodiments described above can provide situational awareness without exposing an officer (or other user) to unknown risks on the other side of the wall or room or outside vehicle. In vehicle applications such as shown in Fig. 4, the present invention enables law enforcement officers to provide instruction to other drivers and create a safer way to communicate. This technology thus mitigates the risk of law enforcement officers when they need to approach a vehicle to provide instruction to the drivers. Sometimes voice and appearance can be threatening for both drivers and also for law enforcement agencies. Having the technology to provide instruction on the ground gives the officer additional security and reaction time while also providing the citizen with some context.

One of ordinary skill in the art would recognize that for any of the embodiments described above, relevant data may be stored. This data may include messages displayed, image/video recorded, and metadata of a projector display event. This data may be stored in any of the components described above (projector, camera, motion sensor), or in additional storage hardware, permanently or temporarily. Furthermore, the systems methods described herein may be implemented in a computer program, software, or firmware incorporated in a computer-readable medium for execution by a computer or processor. Examples of computer-readable media include electronic signals (transmitted over wired or wireless connections) and non-transitory computer-readable storage media. Examples of non-transitory computer-readable storage media include, but are not limited to, a read only memory (ROM), a random access memory (RAM), a register, cache memory, semiconductor memory devices, magnetic media, such as internal hard disks and removable disks, magneto-optical media, and optical media such as CD-ROM disks, and digital versatile disks (DVDs). As such, a computer-readable medium, computer, processor, and/or non-transitory computer-readable storage media may be incorporated in any of the components described above (projector, camera, motion sensor), or in additional hardware.

## Claims

1. A communication and security system comprising:
a projector mounted to display an image onto a static surface of an interior of a building or vehicle; and
a camera mounted to an exterior of the building or vehicle for providing a video feed to the projector,
wherein the projector displays the video feed from the camera onto the static surface.

2. The communication and security system of claim 1, wherein the projector and camera are mounted to a building, further comprising:
a motion detector configured to activate the projector and the camera.

3. The system of claim 1 , wherein the system does not have a dedicated display screen.

4. The system of claim 1, wherein the system does not have a network connection.

5. The system of claim 1, further comprising:
a second projector mounted to display an image onto a second static surface of an exterior of the building or vehicle;
a memory for storing a message; and
a processor coupled to the memory, to cause the system to display the message via the second projector.

6. The system of claim 5 , wherein the second projector does not have a dedicated display screen.

7. A one-way communication system comprising:
a projector mounted to display an image on a static surface of an exterior of a building or vehicle;
a memory storing a message; and
a processor coupled to the memory, to cause the system to display the message via the projector.

8. The system of claim 7, wherein the message is prerecorded.

9. The system of claim 7, wherein the projector is mounted to a building, further comprising:
a camera; and
a second projector mounted to display an image from the camera on a static surface of an interior of a building or vehicle,
the processor further configured to receive a user input to define the message.

10. The system of claim 9, wherein the system does not have a network connection.

11. The system of claim 9, wherein the system does not have a wireless network connection.

12. The system of claim 7, wherein the projector is mounted to a vehicle, and wherein the projector is positioned to display the image near a second vehicle while the vehicle is in motion.
